# EUROPÄISCHE PATENTSCHRIFT

(11) **EP 1 051 670 B1**
(45) Veröffentlichungstag und Bekanntmachung des Hinweises auf die Patenterteilung: **11.09.2002**
(21) Anmeldenummer: 99910165.2
(22) Anmeldetag: 29.01.1999
(51) Int. Cl.: G05B 19/44

(54) **VERFAHREN ZUM STEUERN MEHRERER SCHRITTMOTORMODULE MIT VORHERIGEM LADEN VON RAMPENDATEN**
METHOD FOR CONTROLLING SEVERAL STEPPING MOTOR MODULES WITH PRIOR LOADING OF RAMP DATA
PROCEDE POUR COMMANDER PLUSIEURS MODULES MOTEURS PAS A PAS AVEC CHARGEMENT PREALABLE DE DONNES DE RAMPE

(30) Priorität: 29.01.1998 DE 19803417
(43) Veröffentlichungstag der Anmeldung: 15.11.2000
(73) Patentinhaber: Océ Printing Systems GmbH, 85586 Poing (DE)
(72) Erfinder: ANDRESEN, Hermann, D-84431 Weidenbach (DE); RIGAUER, Reinhold, D-85435 Erding (DE)
(74) Vertreter: Schaumburg, Thoenes & Thurn
(86) Internationale Anmeldenummer: EP9900591
(87) Internationale Veröffentlichungsnummer: WO99039250

(56) Entgegenhaltungen:
- US-A- 4 568 866
- US-A- 5 508 596

## Beschreibung

Die Erfindung betrifft ein Verfahren zum Steuern mehrerer Schrittmotormodule, bei dem je eine Leistungseinheit der Schrittmotormodule mindestens einen Schrittmotor mit Stromimpulsen versorgt, wobei durch jeden Stromimpuls der Schrittmotor um einen Schritt weiterbewegt wird. Eine Leistungseinheit erhält von einer Logikbaugruppe zeitlich voneinander beabstandete Impulse, deren jeweilige Impulsflanke in der Leistungseinheit einen Stromimpuls erzeugt und deren jeweiliger Impulsabstand zum vorherigen Impuls aus einem Satz von Rampendaten ermittelt wird. Ferner betrifft die Erfindung eine Einrichtung zum Durchführen des Verfahrens.

Schrittmotormodule werden insbesondere in Druck- oder Kopiergeräten zum Antreiben von Förderwalzen verwendet, welche das zu bedruckende Papier oder Vorlagedokumente durch das Druck- oder Kopiergerät fördern. Ein Druckgerät ist beispielsweise in der WO 98/18060 A1 beschrieben.

Die Schrittmotore in Druck- oder Kopiergeräten werden nach einer vorgegebenen Drehzahl-Zeit-Kurve beschleunigt oder abgebremst. Diese Drehzahl-Zeit-Kurve zur Beschleunigung wird auch Rampe genannt. Zum Steuern des Hochlaufens und des Abbremsens des Schrittmotors besteht die Möglichkeit, daß eine Gerätesteuerung die Logikbaugruppe mit den erforderlichen Rampendaten fortlaufend versorgt. Ein solches System ist beispielsweise bei Teodorescu, EMA 90/4, S. 106-109 (Abb. 3) beschrieben. Ein ähnliches System ist aus der DE 25 11 640 A bekannt. Wenn in derartigen Systemen eine Vielzahl von Rampendaten im Echtzeitbetrieb übertragen werden müssen, steigt der hierfür erforderliche technische Aufwand sowohl auf Seiten der Gerätesteuerung als auch auf Seiten des Schrittmotormoduls erheblich an. Ein weiteres Problem tritt auf, wenn die Versorgung von Rampendaten über ein Bussystem erfolgt. Da das Bussystem schwankende Reaktionszeiten hat, ist nicht sichergestellt, daß die von der Gerätesteuerung ausgegebenen Rampendaten mit immer konstanter Verzögerung in die erforderlichen Drehschritte für den Schrittmotor umgesetzt werden. Vielmehr ist diese Verzögerung abhängig von der aktuellen Belastung des Bussystems, so daß das Hochlaufen und das Abbremsen des Schrittmotors nicht exakt der vorgegebenen Rampe folgt. Dieses Problem wirkt sich besonders dann negativ aus, wenn mehrere Schrittmotormodule von der Gerätesteuerung mit Rampendaten versorgt werden und die betreffenden Schrittmotore identische Rampen fahren sollen, um identische Transportgeschwindigkeiten bereitzustellen.

Aus dem Artikel Weidauer, Servoantriebe - vom einfachen Steller zum intelligenten Systembaustein, AGT 4/96, S. 14-18 und aus der DE 39 28 451 A1 sind Schrittmotorsysteme bekannt, bei denen mehrere Servoantriebe in einem komplexeren System jeweils eine eigene Logik besitzen. Zur Umstellung der Antriebscharakteristik können jeweils neue Parameter von außen geladen werden.

Aus der US-A-4,568,866 ist ein Verfahren zum Steuern von Schrittmotoren bekannt, bei dem Rampendaten in Schrittmotormodule zuvor geladen werden. Mehrere Module, die durch Mikroprozessoren gestützt sind, arbeiten so zusammen, daß verschiedene Schrittmotoren gleichzeitig angesteuert werden können. Die Rampendaten werden zentral in einem Computer berechnet und über ein Bussystem den Modulen zum Ansteuern der Schrittmotore übertragen.

Es ist Aufgabe der Erfindung, ein Verfahren und eine Einrichtung zum Steuern eines Schrittmotormoduls anzugeben, das bzw. die hohe Flexibilität hat und unter Echtzeitbedingungen sicherstellt, daß die geforderten Beschleunigungs- und Verzögerungsrampen genau eingehalten werden.

Gemäß der Erfindung wird ein Verfahren zum Steuern mindestens eines Schrittmotormoduls bereitgestellt, bei dem ne Leistungseinheit des Schrittmotormoduls mindestens einen Schrittmotor mit Stromimpulsen versorgt, wobei jeder Stromimpuls den Schrittmotor um einen Schritt weiterbewegt. Die Leistungseinheit erhält von einer Logikbaugruppe Impulse, deren jeweilige Impulsflanke in der Leistungseinheit einen Stromimpuls erzeugt und deren jeweiliger Impulsabstand zum vorherigen Impuls aus einem Satz von Rampendaten ermittelt wird. Die Logikbaugruppe liest zur Festlegung der Impulsweite des jeweiligen pulsweitenmodulierten Impulses in vorbestimmten Zeitabständen aufeinanderfolgende Rampendaten. In der Logikeinheit werden mehrere Sätze von Rampendaten bereitgestellt. Die Sätze von Rampendaten werden vorab zentral in einem Computer berechnet und der Logikbaugruppe in einer Ladephase vor dem Betrieb des Schrittmotors über ein Bussystem übermittelt. Dem Schrittmotormodul wird während des Betriebs von einer Steuerung über das Bussystem der aktuelle Satz von Rampendaten mitgeteilt. Durch ein Startsignal wird die Umsetzung des in der Logikbaugruppe ausgewählten Satzes von Rampendaten in Impulse mit variablem Abstand gestartet.

Bei der Erfindung werden die Sätze von Rampendaten, welche die ansteigende Rampe beim Beschleunigen des Schrittmotors und die abfallende Rampe beim Abbremsen des Schrittmotors definieren, während der Ladephase, d.h. außerhalb des eigentlichen Betriebs des Schrittmotormoduls, in einem Computer berechnet. Die Grundlagen und die Parameter für diese Berechnung sind zum einen durch charakteristische Eigenschaften des Schrittmotors vorgegeben und zum anderen durch die jeweiligen, in der Anwendung gewünschten Eigenschaften.

Zur Berechnung der Rampendaten werden Rechenformeln schrittmotorspezifisch vorgegeben. Die durch die Berechnung ermittelten Sätze von Rampendaten werden über ein Bussystem der jeweiligen Logikbaugruppe übermittelt und dort abgespeichert. Durch die Berechnung außerhalb der eigentlichen Betriebsphase ist genügend Zeit vorhanden, um auch komplexe und dementsprechend genaue Berechnungsformeln einsetzen zu können.

Mit der Erfindung wird es insbesondere möglich, dezentral, d.h. in den einzelnen Schrittmotormodulen, alle berechneten Rampendatensätze einmalig abzuspeichern, insbesondere in einem nicht flüchtigen Speicher, und diese Daten betriebsabhängig bei Bedarf zu verwenden. Dabei kann insbesondere vorgesehen sein, die aktuell benötigten Daten vom nicht flüchtigen Speicher in einen flüchtigen Arbeitsspeicher zu laden, wobei die Zugriffszeit des flüchtigen Speichers im Betrieb wesentlich kürzer ist als die des nicht flüchtigen Speichers. Hierdurch wird es möglich, den Schrittmotor bzw. eine Vielzahl von Schrittmotoren in Echtzeit anzusteuern.

Während des Betriebs des Schrittmotormoduls kann der Logikbaugruppe insbesondere über das Bussystem von der Gerätesteuerung der aktuelle, d.h. jeweils benötigte Satz von Rampendaten mitgeteilt werden. Dieser Satz von Rampendaten legt dann die Drehzahl-Zeit-Kurve des Schrittmotors fest. Die Übermittlung eines logischen Namens oder einer Kennziffer für den auszuwählenden Satz von Rampendaten über das Bussystem ist nicht zeitkritisch und kann im Echtzeitbetrieb auch bei einfachen Bussystemen und Interfacesystemen geleistet werden.

Gemäß der Erfindung wird ein zusätzliches Startsignal an die Logikbaugruppe ausgesendet, woraufhin die Umsetzung der Rampendaten in pulsweitenmodulierte Impulse gestartet wird. Auf diese Weise kann die Übermittlung des logischen Namens des ausgewählten Satzes von Rampendaten und der eigentliche Startvorgang für die Änderung der Drehzahl des Schrittmotors zeitlich entkoppelt werden. Beispielsweise können bei mehreren Schrittmotormodulen die für einen bestimmten Bewegungsablauf der Schrittmotore erforderlichen Sätze von Rampendaten benannt werden, indem in einem zeitlich vorgezogenen und daher zeitunkritischen Datenübertragungsvorgang über das Bussystem die notwendigen Sätze von Rampendaten mitgeteilt werden. Erst zu einem späteren Zeitpunkt wird das zeitkritische Startsignal ausgegeben, welches ohne großen Datenübertragungsaufwand und daher innerhalb eines kurzen Zeitfensters übertragen werden kann, und die Umsetzung der Rampendaten wird gestartet.

Für zeitkritische Anwendungen wird das Startsignal Über eine separate, vom Bussystem getrennte Leitung übertragen. Auf diese Weise spielt die Reaktionszeit des Bussystems und seine Auslastung keine Rolle. Vielmehr können mehrere Schrittmotormodule exakt zum gleichen Zeitpunkt das Startsignal erhalten, so daß identische Drehzahl-Zeit-Kurven gleichzeitig von mehreren Schrittmotoren gefahren werden können.

Gemäß einem weiteren Aspekt der Erfindung wird eine Einrichtung zum Steuern mehrerer Schrittmotormodule nach Anspruch 10 angegeben. Diese Einrichtung hat die für das Verfahren bereits beschriebenen vorteilhaften Wirkungen.

Ausführungsbeispiele der Erfindung werden im folgenden anhand der Zeichnung erläutert. Darin zeigen:
- Figur 1: ein Schrittmotormodul, dessen Logikbaugruppe durch einen externen Personal Computer mit Sätzen von Rampendaten geladen wird,
- Figur 2: ein Flußdiagramm mit Verfahrensschritten, die während der Initialisierungsphase ablaufen,
- Figur 3: ein Flußdiagramm mit Verfahrensschritten, die während des eigentlichen Betriebs des Schrittmotormoduls durchgeführt werden,
- Figur 4: schematisch die Anordnung mehrerer Schrittmotormodule mit einer Gerätesteuerung und
- Figur 5: eine Anordnung mehrerer Schrittmotormodule mit einer Gerätesteuerung in einem elektrografischen Druckgerät.

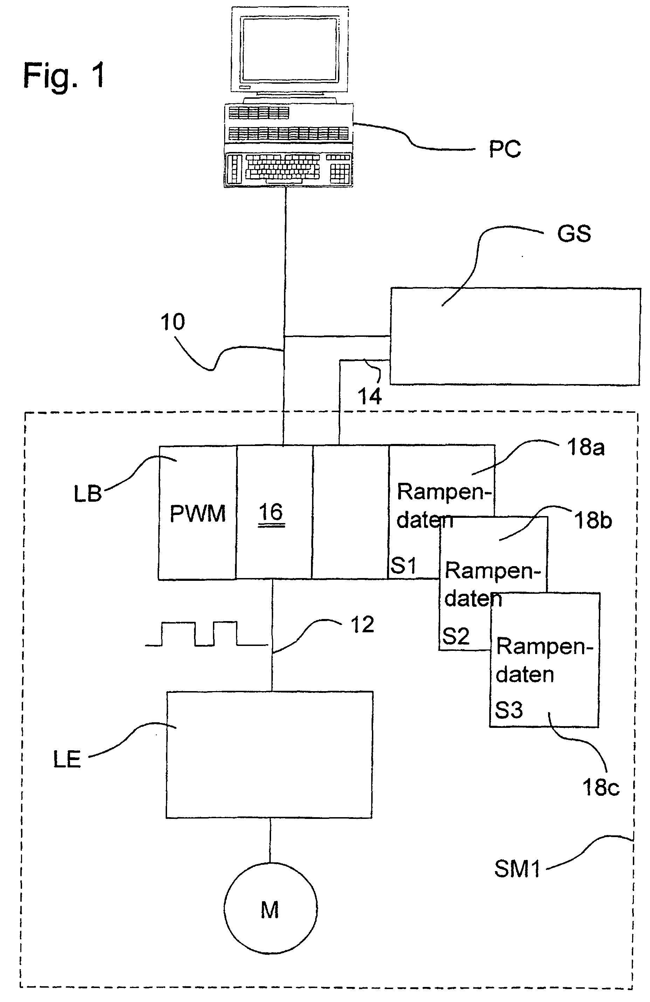

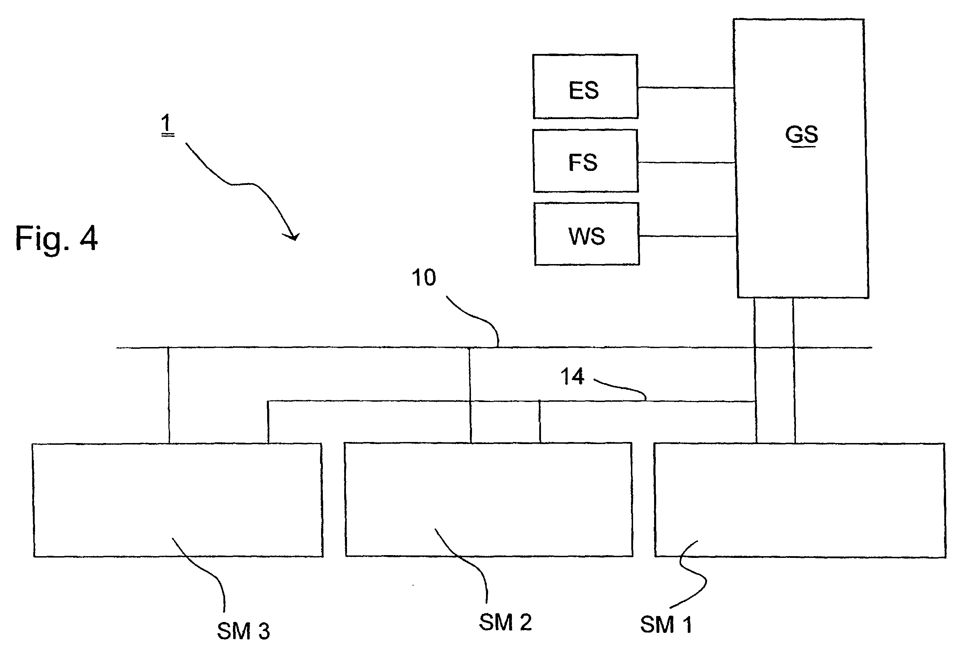

Figur 1 zeigt schematisch den Aufbau eines Schrittmotormoduls SM1, welches über einen Datenbus 10 mit einem Personal Computer PC und einer Gerätesteuerung GS verbunden ist. Die Gerätesteuerung GS steuert ein elektrofotografisches Hochleistungsdruckgerät 1, welches eine Vielzahl von Schrittmotormodulen nach Art des Schrittmotormoduls SM1 enthält, eine elektrofotografische Entwicklerstation ES, eine Fixierstation FS und diverse andere Komponenten wie Weichensteuerungen WS. Diese Komponenten können direkt an die Gerätesteuerung GS angeschlossen sein, siehe Fig. 4, oder über das gemeinsame Bussystem 10 mit der Gerätesteuerung GS verbunden sein. Weitere Details des Druckgeräts 1 sind in der WO 98/18060 A1 beschrieben, deren Inhalt hiermit durch Bezugnahme in die vorliegende Beschreibung aufgenommen wird.

Die zu den jeweiligen Schrittmotormodulen SM1, SM2, SM3 gehörigen Schrittmotore treiben Förderwalzen an, welche Einzelblätter durch das Druck- oder Kopiergerät fördern. Innerhalb des Druckgerätes lösen Lichtschranken, die mit den Schrittmotormodulen SM1, SM2, SM3 gekoppelt sind, den Rampenbetrieb der zugehörigen Motore aus.

Ein Schrittmotormodul (SM1) enthält eine Logikbaugruppe LB sowie einen Arbeitsspeicher, in welchem Sätze S1, S2, S3 von Rampendaten gespeichert werden können. Die Logikbaugruppe LB enthält ferner ein Pulsweitenmodulations-Modul PWM, welches einen Mikroprozessor enthält, der Steuerfunktionen für die Logikbaugruppe übernimmt. Das Modul PWM erzeugt aus den Rampendaten der Sätze S1, S2, S3 Impulse mit variablem Abstand zum vorherigen Impuls, die auf der Leitung 12 einer Leistungseinheit LE zugeführt werden. Die Impulsabstände der Impulse werden aus den Rampendaten ermittelt. Diese Rampendaten entsprechen Zeitwerten.

Die Leistungseinheit LE erzeugt aus der ansteigenden Flanke des im Abstand modulierten Impulses einen Stromimpuls, den sie dem Schrittmotor M zuführt. Bei jedem Stromimpuls wird der Schrittmotor M um einen Drehschritt weiterbewegt.

Die Logikbaugruppe LB ist so ausgelegt, daß der aus einem Satz S1, S2, S3 von Rampendaten zuletzt ausgelesene Wert, welcher den Impulsabstand definiert, solange beibehalten wird, bis neue Rampendaten ausgelesen werden. Demgemäß bleibt bei konstantem Impulsabstand die Drehgeschwindigkeit des Schrittmotors M konstant. Um die Drehzahl des Schrittmotors M zu ändern, greift die Logikbaugruppe LB auf einen ausgewählten Satz S1, S2, S3 von Rampendaten zu. Die Rampendaten des ausgewählten Satzes werden in vorbestimmten Zeitabständen, welche aus dem Taktsignal des die Logikbaugruppe LB steuernden Mikroprozessors gewonnen werden, ausgelesen und daraus für den aktuellen abstandsmodulierten Impuls der Impulsabstand bestimmt. Der nächste Impuls wird nach Verstreichen des Zeitabstandes aus dem nächsten Rampendatum desselben Satzes ermittelt. Der Satz von Rampendaten enthält für jeden Schritt einer ansteigenden oder einer abfallenden Rampe ein Rampendatum. Wenn beispielsweise eine Rampe 500 Drehschritte umfaßt, so enthält der betreffende Satz von Rampendaten 500 Rampendaten. Bei einer ansteigenden Rampe, d.h. die Drehgeschwindigkeit des Schrittmotors M wird von einem niedrigen Wert auf einen hohen Wert geändert, nimmt der Impulsabstand der von der Logikbaugruppe LB ausgegebenen Impulse fortlaufend ab. Bei einer abfallenden Rampe nimmt der Impulsabstand zu. Wie erwähnt, wird der Impulsabstand entsprechend dem letzten Rampendatum des ausgewählten Satzes S1, S2 oder S3 beibehalten, d.h. die Drehzahl des Schrittmotors M bleibt konstant.

Die Gerätesteuerung GS ist ferner über eine zusätzliche Leitung 14, die getrennt vom Datenbus 10 geführt ist, mit der Logikbaugruppe LB verbunden. Über diese Leitung 14 wird ein Startsignal von der Gerätesteuerung GS ausgegeben, um die Umsetzung des in der Logikbaugruppe ausgewählten Satzes von Rampendaten in abstandsmodulierte Impulse zu starten.

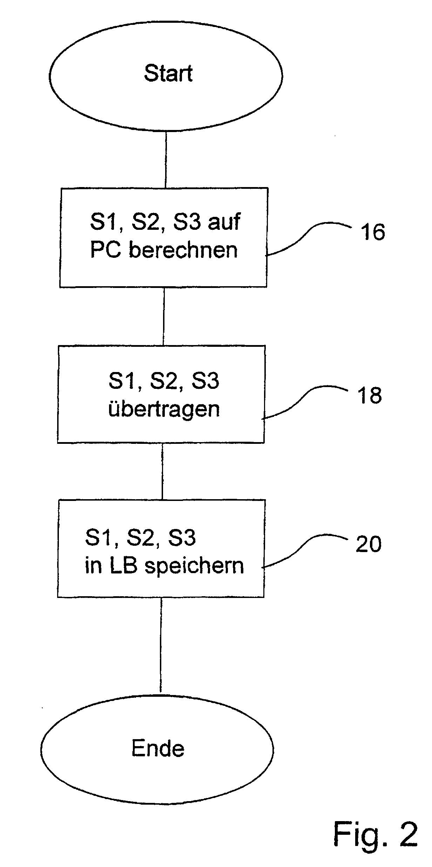

Die vor einer Druckphase durchzuführenden Verfahrensschritte unter Verwendung der in der Figur 1 gezeigten Einrichtung werden anhand des in Figur 2 dargestellten Flußdiagramms verdeutlicht.

In einer Berechnungsphase werden im Verfahrensschritt 16 auf dem Personal Computer PC geeignete Sätze S1, S2, S3 von Rampendaten für die verschiedenen Schrittmotoren des Druckgeräts berechnet. Hierzu werden auf Herstellerangaben für die Schrittmotoren M sowie auf vorgegebene Berechnungsformeln zurückgegriffen. Außerdem wird bei dieser Berechnung der Sätze S1, S2, S3 der jeweils gewünschte Bewegungsablauf, d.h. die erforderliche Geschwindigkeit, die Beschleunigung und die Verzögerung der Schrittmotoren M berücksichtigt. Zur Ermittlung der Sätze S1, S2, S3 können komplexe Rechenformeln verwendet werden, da während der Berechnungsphase ausreichend Zeit zur Verfügung steht. Nach dem Berechnen der Sätze S1, S2, S3 werden in einer Ladephase (Schritt 18) die Rampendaten über den Datenbus 10 in einen nicht flüchtigen, beschreibbaren, lesbaren und löschbaren elektronischen Speicher 16, beispielsweise in ein EEPROM oder in ein Flash-ROM der Logikbaugruppe LB übertragen.

Nach dem Start des Druckers werden in einer Initialisierungsphase (Schritt 20) die Rampendatensätze S1, S2, S3 aus dem Speicher 16 in entsprechende Speicherbereiche des Arbeitsspeichers (RAM) 18a, 18b, 18c der jeweiligen Logikbaugruppe LB geladen. Dort stehen diese Sätze während des Druckbetriebes zur Verfügung. Der Arbeitsspeicher (RAM) hat in bekannter Weise eine kürzere Zugriffszeit als der nicht flüchtige Speicher 16 und ermöglicht somit einen Echtzeitbetrieb. Je nach Anwendungsfall kann eine große Zahl von Rampendaten-Sätzen in jeder Logikbaugruppe LB abgespeichert werden.

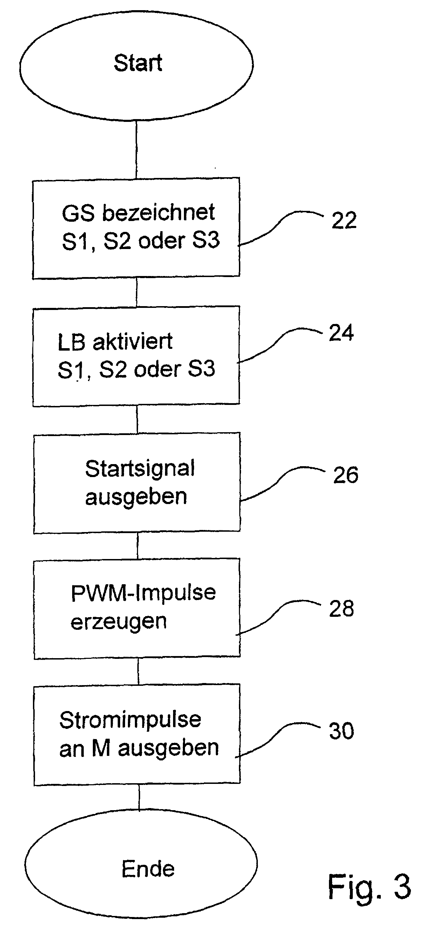

Die Verfahrensschritte zum Steuern des Schrittmotors M während des Druckbetriebs werden im folgenden anhand des Flußdiagramms nach Figur 3 beschrieben. Gemäß dem gewünschten Transport von Einzelblättern oder der kontinuierlichen Papierbahn im Drucker gibt die Gerätesteuerung GS über den Datenbus 10 Informationen an die Logikbaugruppe LB und bezeichnet den ausgewählten Satz S1, S2, S3 von Rampendaten, um eine bestimmte Drehzahländerung des Schrittmotors M herbeizuführen (Schritt 22). Im nachfolgenden Schritt 24 aktiviert die Logikbaugruppe LB den bezeichneten Satz von Rampendaten. Wenn auch die weiteren Schrittmotormodule des Druckers mit entsprechenden Informationen über die ausgewählten Sätze von Rampendaten versorgt sind und ein vorbestimmter Prozeßzustand erreicht ist, gibt die Gerätesteuerung GS das Startsignal über die Leitung 14 aus, woraufhin die Logikbaugruppe des Schrittmotormoduls SM1 bzw. die Logikbaugruppen der weiteren Schrittmotormodule Impulse mit variablem Abstand auf der Grundlage der Rampendaten des ausgewählten Satzes ausgeben (Schritt 26 und Schritt 28). Die jeweilige Leistungseinheit LE erzeugt bei ansteigenden Flanken der Impulse einen an den Schrittmotor M angepaßten Stromimpuls, um den Schrittmotor M in der gewünschten Drehrichtung um einen Schritt weiter zu bewegen. Aufgrund des gleichzeitig an mehrere Schrittmotormodule abgegebenen Startsignals haben sämtliche beteiligten Schrittmotore zu jedem Zeitpunkt dieselbe Drehgeschwindigkeit, wodurch der Papiertransport im Drucker sehr gleichmäßig und spannungsfrei erfolgt. Verzögerungszeiten, welche bei der Übertragung von Daten auf dem Datenbus 10 auftreten können, spielen bei dieser Art der Anordnung und der Durchführung des Verfahrens keine Rolle.

Figur 4 zeigt schematisch die Anordnung mehrerer Schrittmotormodule SM1, SM2, SM3, die an die Gerätesteuerung GS angeschlossen sind. Diese Gerätesteuerung GS überträgt während der Initialisierungsphase die für die Schrittmotormodule SM1, SM2, SM3 notwendigen Sätze von Rampendaten über den Datenbus 10. Während des Betriebs unter Echtzeitbedingungen werden über diesen Datenbus 10 Informationen übertragen die die für einen bestimmten Bewegungsablauf erforderlichen Sätze bezeichnen. Über die vom Datenbus 10 getrennte Leitung 14 wird ein gemeinsames Startsignal gleichzeitig an alle am Papiertransport im Drucker beteiligten Schrittmotormodule SM1, SM2, SM3 übermittelt, so daß die Schrittmotormodule SM1, SM2, SM3 eine Änderung der Drehzahl der von ihnen angesteuerten Schrittmotore synchron ausführen.

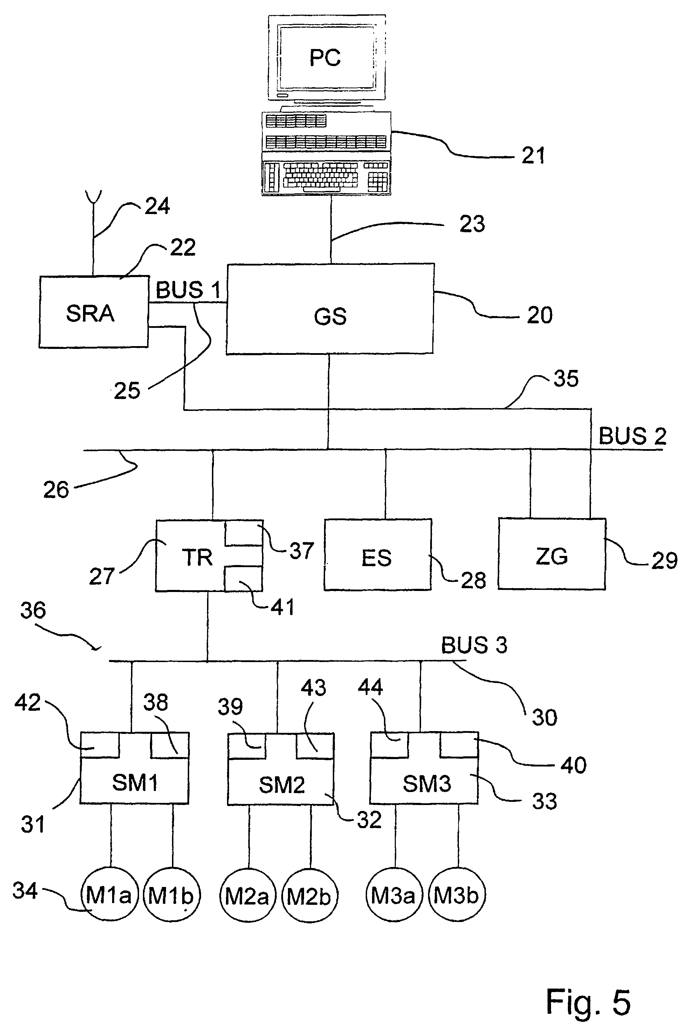

Figur 5 zeigt eine weitere Anordnung von Schrittmotormodulen in einem elektrografischen Gerät. Aus dieser Figur geht insbesondere die Bus-Struktur hervor, über die die verschiedenen Komponenten des elektrofotografischen Geräts miteinander verbunden sind.

Zentrale Komponente ist die Gerätesteuerung 20. Sie ist über einen ersten SDLC-Bus 25 mit einem Rasterprozessor 22 verbunden, der seinerseits über eine Verbindungsleitung 24 Druckdaten von einer Druckdatenquelle, beispielsweise von einem Host-Computer erhält. Diese Druckdaten werden in dem Rasterprozessor 22 aufgerastert und über eine separate Leitung 35 zur Elektronik 29 eines Zeichengenerators gesandt, der diese Signale umsetzt in optische Belichtungsimpulse zur Belichtung einer elektrofotografischen Einheit, beispielsweise einer Fotoleitertrommel oder eines Fotoleiterbands.

Einzelheiten eines derartigen Rasterprozessors 22 sind beispielsweise aus der WO 96/09611 A1 bekannt. Ein entsprechender Zeichengenerator ist beispielsweise aus der WO 96/37862 A1 bekannt. Der Inhalt dieser beiden WO-Veröffentlichungen wird hiermit durch Bezugnahme in die vorliegende Beschreibung aufgenommen.

Über die Druckdatenleitung 35 ist gewährleistet, daß im laufenden Druckbetrieb die Druckdaten vom SRA-Controller 22 (SRA bedeutet scalable raster architecture) hochperformant in die Steuerung 29 des Zeichengenerators übertragen werden kann. Durch diese Entkopplung der Druckdatenübertragung von der Übertragung anderer Steuerungsdaten des Druckgeräts, welche über die Bus-Systeme 25, 26 bzw. 30 stattfinden, ist eine hohe Druckgeschwindigkeit gewährleistet.

Die Gerätesteuerung 20 tauscht Steuerungsdaten mit anderen Gerätekomponenten einerseits über den SDLC-Bus 25 und andererseits über den SDLC-Bus 26 aus. An den Bus 26 sind neben der Gerätesteuerung 20 eine Elektronik 36 zur Steuerung der Antriebe, eine Elektronik 28 zur Steuerung einer elektrofotografischen Entwicklerstation und die Elektronik 29 zur Steuerung des Zeichengenerators angeschlossen.

Die Steuerung 36 für die Antriebe umfaßt eine zentrale Antriebselektronik 27, sowie einen CAN-Bus 30, über den die zentrale Antriebselektronik 27 mit den verschiedenen Schrittmotormodulen 31, 32 und 33 verbunden ist. An jedem der Schrittmotormodule sind wiederum ein oder mehrere Motoren M1a, M1b, M2a, M2b, M3a, M3b angeschlossen. Die Schrittmotormodule 31, 32, 33 sind in ihrem Aufbau hinsichtlich der Logik-Baugruppe, des Pulsweiten-Modulationsmoduls und der Leistungseinheit identisch zu dem in Figur 1 gezeigten Schrittmotormodul SM1.

Die Ansteuerungsdaten des Druckgeräts der Figur 5 können ähnlich wie bei dem zu Figur 2 beschriebenen Ausführungsbeispiel berechnet und geladen werden. Auf dem Personal Computer 21 werden dabei zunächst geeignete Sätze S1, S2, S3 von Rampendaten für die verschiedenen Schrittmotoren des Druckgeräts berechnet. Hierzu wird wiederum auf Herstellerangaben für die Schrittmotoren M1a, M1b, M2a usw. sowie auf vorgegebene Berechnungsformeln zurückgegriffen und der jeweils gewünschte Bewegungsablauf, d.h. die erforderliche Geschwindigkeit, die Beschleunigung und die Verzögerung der Schrittmotoren M1a usw. berücksichtigt. Nach dem Berechnen der Rampendatensätze S1, S2, S3 werden die Rampendaten über die V24-Schnittstelle 23 in einen nicht flüchtigen, lesund beschreibbaren Speicher (Flash-ROM) der Gerätesteuerung 20 übertragen.

Die Rampendatensätze werden nicht nur in einem Flash-ROM der Gerätesteuerung 20 hinterlegt, sondern auch in einem entsprechenden, nicht flüchtigen Speicher 37 der zentralen Antriebssteuerung 27. Die zentrale Antriebssteuerung 27 leitet diese Daten wiederum an die Schrittmotormodule 31, 32 und 33 weiter, die die Daten ebenfalls in eigene Flash-ROM-Speicher 38, 39 und 40 einspeichern. Die Gerätesteuerung 20 und das zentrale Antriebsmodul 27 übernehmen dabei eine Relaisfunktion zur Übertragung der Rampendaten in die Schrittmotormodule 31, 32, 33.

Durch diese Variante der Datenspeicherung wird eine Redundanz geschaffen, durch die ein Druckbetrieb auch bei Ausfall eines Speichers in einer der Baugruppen aufrecht erhalten werden kann, indem die entsprechenden Daten aus dem Speicher einer anderen, insbesondere von der zentralen Antriebssteuerung 27 in die Schrittmotormodule 31, 32 bzw. 33 geladen wird.

Eine vereinfachte Redundanz ist möglich, wenn die Rampendaten aller Schrittmotore aller Schrittmotormodule in nur in einem Flash-ROM Speicher des Druckgeräts, z.B. in der Gerätesteuerung 20 oder in der zentralen Antriebssteuerung 27, gespeichert werden und je Schrittmotormodul nur die zu diesem Modul gehörenden Rampendatensätze abgespeichert werden.

Zum Start des Druckers werden in einer Initialisierungsphase die in den Flash-ROM-Speichern 37, 38, 39, 40 befindlichen Rampendaten in entsprechende Arbeitsspeicher (RAM) 41, 42, 43, 44 der zugehörigen Komponenten 27, 31, 32 und 33 geladen. Dort stehen diese Rampendatensätze während des Druckbetriebes zur Verfügung.

Die Erfindung ermöglicht es insbesondere, in den Arbeitsspeicher eines Schrittmotormoduls nur aktuell benötigte Rampendatensätze zu laden und die Rampendatensätze im Arbeitsspeicher während des Druckbetriebs in Abhängigkeit von Geräte-Betriebszuständen zu aktualisieren, d.h. aus dem Flash-Rom in den Arbeitsspeicher zu laden. Dadurch kann die Größe des Arbeitsspeichers in den Schrittmotormodulen in wirtschaftlichen Grenzen gehalten werden. Beispielsweise können im Druckbetrieb verschiedene Druckgeschwindigkeiten in verschiedenen Druckmodi, etwa bei einem Simplexdruckbetrieb oder einem Duplexdruckbetrieb, vorgesehen sein und dementsprechend verschiedene Rampendatensätze in den Schrittmotormodulen benötigt werden.

Während des Druckbetriebes wird von der Gerätesteuerung 20 oder von der zentralen Antriebssteuerung 27 über das Bussystem 30 an die Schrittmotormodule 31, 32, 33 jeweils eine Information (Code) übermittelt, aus der die jeweils benötigten Rampendatensätze hervorgehen. In den einzelnen Schrittmotormodulen 31, 32, 33 läßt sich auf die jeweils zugewiesenen Rampendatensätze über deren Arbeitsspeicher 42, 43, 44 in Echtzeit zugreifen, indem das Startsignal über eine separate Leitung ähnlich der Leitung 14 in Figur 1 von der Gerätesteuerung oder vom zentralen Antriebsmodul 27 an die Schrittmotormodule 31, 32, 33 übermittelt wird.

Obwohl die Erfindung anhand eines Hochleistungsdruckgerätes beschrieben wurde, das Einzelblätter transportiert, ist sie auch anwendbar für Kopiergeräte sowie für Geräte, bei denen andere Güter mit Schrittmotoren transportiert werden, beispielsweise Dokumente oder bahnförmige Aufzeichnungsträger.

### Bezugszeichenliste

- 1: Druckgerät
- 10: Datenbus
- 12: Leitung
- 14: zusätzliche Leitung
- 16: Flash-ROM
- 18a, 18b, 18c: RAM
- 20: Gerätesteuerung
- 21: PC
- 22: SRA-Controller
- 23: V24-Schnittstelle
- 24: Druckdaten-Schnittstelle
- 25: erster Bus
- 26: zweiter Bus
- 27: Zentrale Antriebselektronik
- 28: Steuerung der Entwicklerstation
- 29: Steuerung des Zeichengenerators
- 30: dritter Bus
- 31: erstes Schrittmotormodul
- 32: zweites Schrittmotormodul
- 33: drittes Schrittmotormodul
- 34: Motor
- 35: Druckdatenleitung
- 36: Antriebssteuerung
- 37, 38, 39, 40: Flash-ROM-Speicher
- 41, 42, 43: RAM-Arbeitsspeicher
- ES: Entwicklerstation
- FS: Fixierstation
- SM1, SM2, SM3: Schrittmotormodul
- PC: Personal Computer
- GS: Gerätesteuerung
- LB: Logikbaugruppe
- PWM: Pulsweitenmodulations-Modul
- LE: Leistungseinheit
- M: Schrittmotor
- WS: Weichensteuerung

## Patentansprüche

1. Verfahren zum Betrieb mehrerer Schrittmotormodule (SM1, SM2, SM3) insbesondere in einem Druck- oder Kopiergerät,
bei dem je eine Leistungseinheit (LE) der Schrittmotormodule (SM1, SM2, SM3) mindestens einen Schrittmotor (M) mit Stromimpulsen versorgt, wobei der Schrittmotor (M) durch jeden Stromimpuls um einen Schritt weiterbewegt wird,
die Leistungseinheit (LE) von einer Logikbaugruppe (LB) des jeweiligen Schrittmoduls (SM1, SM2, SM3) voneinander zeitlich beabstandete Impulse erhält, deren jeweilige Impulsflanke in der Leistungseinheit (LE) einen Stromimpuls erzeugt und deren jeweiliger Impulsabstand aus einem Satz (S1, S2, S3) von Rampendaten ermittelt wird, wobei die Logikbaugruppe (LB) zur Festlegung des Impulsabstandes des jeweiligen Impulses in vorbestimmten Zeitabständen aufeinanderfolgende Rampendaten liest,
in jeder Logikbaugruppe (LB) mehrere Sätze (S1, S2, S3) von Rampendaten bereitgestellt werden,
während einer Ladephase die Sätze (S1, S2, S3) von Rampendaten zentral in einem Computer (PC) berechnet und über ein Bussystem (10) der Logikbaugruppe (LB) übermittelt werden,
während des Betriebs des Schrittmotormoduls (LM1) über das Bussystem (10) der aktuelle Satz (S1, S2 oder S3) von Rampendaten von einer Steuerung (GS, 27) an die Logikbaugruppe (LB) mitgeteilt wird,
durch ein Startsignal die Umsetzung des in der Logikbaugruppe (LB) ausgewählten Satzes (S1, S2, S3) von Rampendaten in Impulse mit variablem Abstand gestartet wird, und
bei dem das Startsignal über eine separate, vom Bussystem (10) getrennte Leitung (14) zur Logikbaugruppe (LB) übertragen wird.

2. Verfahren nach Anspruch 1, wobei Rampendatensätze (S1, S2, S3) in einer Initialisierungsphase zum Start des Druckbetriebes aus dem nicht flüchtigen Speicher (16) in einen flüchtigen Speicher (18) der Logikbaugruppe (LB) übertragen werden.

3. Verfahren nach einem der Ansprüche 1 oder 2, wobei die Leistungseinheit (LE) aus der ansteigenden Impulsflanke des Impulses einen stromimpuls erzeugt.

4. Verfahren nach einem der vorhergehenden Ansprüche, wobei als zentraler Computer ein von einem Operator bedienter Personal Computer (PC) verwendet wird.

5. Verfahren nach einem der vorhergehenden Ansprüche, wobei die Schrittmotormodule (SM1, SM2, SM3) für den Transport von Trägermaterial verwendet werden.

6. Verfahren nach Anspruch 5, wobei die Gerätesteuerung (GS) des Druckers im Druckbetrieb für jedes Schrittmotormodul (SM1, SM2, SM3) den aktuellen Satz (S1, S2, S3) von Rampendaten auswählt, und daß durch ein gemeinsames Startsignal für mehrere Schrittmotormodule die Umsetzung des ausgewählten Satzes (S1, S2, S3) von Rampendaten in Impulse mit variablem Abstand gestartet wird.

7. Verfahren nach einem der vorhergehenden Ansprüche, wobei jeder Satz (S1, S2, S3) von Rampendaten eine Anzahl von Daten enthält, die aufeinanderfolgend den Impulsabstand aufeinander folgender Impulse einer ansteigenden Drehzahlrampe oder einer abfallenden Drehzahlrampe des Schrittmotors angibt

8. Verfahren nach einem der vorhergehenden Ansprüche, wobei die jeweilige Logikbaugruppe (LB) den Impulsabstand des aus einem Satz von Rampendaten zuletzt ausgegebenen Datums beibehält bis ein. neuer Satz (S1, S2, S3) von Rampendaten ausgewählt und das Umsetzen der Rampendaten in Impulsabstände für die Impulse gestartet wird.

9. Verfahren nach einem der vorhergehenden Ansprüche, wobei während des Betriebs des Schrittmotormoduls (LM1) ein neuer Satz (S1, S2, S3) von Rampendaten von einer Steuerung (GS) über das Bussystem (10) an die Logikbaugruppe (LB) übermittelt wird.

10. Einrichtung zum Steuern mehrerer Schrittmotormodule (SM1, SM2, SM3), insbesondere in einem Druck- oder Kopiergerät,
mit mehreren Leistungseinheiten (LE), die jeweils mindestens einen Schrittmotor (M) mit Stromimpulsen versorgen, wobei die Schrittmotore (M) durch jeden Stromimpuls um einen Schritt weiterbewegt werden,
wobei jede der Leistungseinheiten (LE) von je einer Logikbaugruppe (LB) Impulse erhält, deren jeweilige Impulsflanke in der Leistungseinheit (LE) einen Stromimpuls erzeugt und deren jeweiliger Impulsabstand zum vorherigen Impuls aus einem Satz (S1, S2, S3) von Rampendaten ermittelt wird, wobei die Logikbaugruppe (LB) zur Festlegung des Impulsabstandes des jeweiligen Impulses in vorbestimmten Zeitabständen aufeinanderfolgende Rampendaten liest,
mehrere Sätze (S1, S2, S3) von Rampendaten in einem Speicher (16, 18a, 18b, 18c) der Logikbaugruppe (LB) bereitgestellt sind,
mit einem Bussystem (10), durch das von einem Computer (PC) berechnete Sätze (S1, S2, S3) von Rampendaten an die Logikbaugruppe (LB) übermittelbar sind,
während des Betriebs des schrittmotormoduls (LM1) über das Bussystem (10) der aktuelle Satz (S1, S2 oder S3) von Rampendaten von einer Steuerung (GS) mitgeteilt wird,
durch ein Startsignal die Umsetzung des in der Logikbaugruppe (LB) ausgewählten Satzes (S1, S2, S3) von Rampendaten in Impulse mit variablem Abstand gestartet wird,
**dadurch gekennzeichnet, daß**
eine separate, vom Bussystem (10) getrennte Leitung (14) vorgesehen ist, die das Startsignal überträgt.

11. Einrichtung nach Anspruch 10, wobei jede Logikbaugruppe (LB) einen nicht flüchtigen Speicher (16) und einen flüchtigen Arbeitsspeicher (18a, 18b, 18c) für die Rampendatensätze aufweist.

12. Einrichtung nach Anspruch 11 mit einer Steuerung (GS, 21, 27), die in Abhängigkeit von Betriebszusänden eines Geräts den Schrittmotormodulen (SM1, SM2, SM3) Rampendatensätze zuweist und bewirkt, daß die Schrittmotormodule (SM1, SM2, SM3) die ihnen zugewiesenen Rampendatensätze in ihren jeweiligen Arbeitsspeicher (18a, 18b, 18c) laden.

13. Einrichtung nach einem der Ansprüche 10 bis 12, **dadurch gekennzeichnet, daß** die Leistungseinheit (LE) aus der ansteigenden Impulsflanke des Impulses einen Stromimpuls erzeugt.

14. Einrichtung nach einem der Ansprüche 10 bis 13, **dadurch gekennzeichnet, daß** sie für ein Druck- oder Kopiergerät mit einer Vielzahl von Schrittmotormodulen (SM1, SM2, SM3) für den Transport von Trägermaterial vorgesehen ist.

15. Einrichtung nach Anspruch 14, **dadurch gekennzeichnet, daß** eine Gerätesteuerung (GS) des Druck- oder Kopiergeräts im Betrieb für jedes Schrittmotormodul (SM1, SM2, SM3) den aktuellen Satz (S1, S2, S3) von Rampendaten auswählt, und daß durch ein gemeinsames Startsignal für mehrere Schrittmotormodule die Umsetzung des ausgewählten Satzes (S1, S2, S3) von Rampendaten in Impulse mit variablem Abstand gestartet wird.

## Claims

1. Method for operating a plurality of stepping motor modules (SM1, SM2, SM3), particularly in a printer or copier,
in which one power unit (LE) of each stepping motor modules (SM1, SM2, SM3) supplies at least one stepping motor (M) with current impulses, the stepping motor (M) being advanced one step by each current impulse,
the power unit (LE) receives pulses which are spaced apart from one another in time from a logic assembly (LB) of the respective stepping module (SM1, SM2, SM3), each edge of which pulses generates a current impulse in the power unit (LE), and each interval of which pulses is calculated from a set (S1, S2, S3) of ramp data, the logic assembly (LB), in order to fix the interval of the respective pulse, reading out items of ramp data which follow one another at predetermined time intervals,
several sets (S1, S2, S3) of ramp data are made available in each logic assembly (LB),
in a loading phase the sets (S1, S2, S3) of ramp data are calculated centrally in a computer (PC) and transferred via a bus system (10) to the logic assembly (LB),
during the operation of the stepping motor module (LM1) the current set (S1, S2 or S3) of ramp data is communicated to the logic assembly (LB) by a control (GS, 27) via the bus system (10),
the conversion of the set (S1, S2, S3) of ramp data which has been selected in the logic assembly (LB) into pulses with a variable interval is started by a start signal, and
in which the start signal is transferred to the logic assembly (LB) via a separate line (14) which is separate from the bus system (10).

2. Method according to claim 1, wherein ramp data sets (S1, S2, S3) are transferred in an initialising phase for starting the printing operation from the non-volatile memory (16) to a volatile memory (18) of the logic assembly (LB).

3. Method according to one of the claims 1 or 2, wherein the power unit (LE) generates a current impulse from the rising edge of the pulse.

4. Method according to one of the preceding claims, wherein a personal computer (PC) which is operated by an operator is used as the central computer.

5. Method according to one of the preceding claims, wherein the stepping motor modules (SM1, SM2, SM3) are used for the transport of carrier material.

6. Method according to claim 5, wherein in the print operation the device control (GS) of the printer selects the current set (S1, S2, S3) of ramp data for each stepping motor module (SM1, SM2, SM3), and the conversion of the selected set (S1, S2, S3) of ramp data into pulses with a variable interval is started by a common start signal for a plurality of the stepping motor modules.

7. Method according to one of the preceding claims, wherein each set (S1, S2, S3) of ramp data contains a number of data which, in succession, indicate the interval between successive pulses of a rising speed ramp or a falling speed ramp of the stepping motor.

8. Method according to one of the preceding claims, wherein the respective logic assembly (LB) maintains the pulse interval of the last output piece of data from a set of ramp data until a new set (S1, S2, S3) of ramp data is selected and the conversion of the ramp data into pulse intervals for the pulses is started.

9. Method according to one of the preceding claims, wherein during the operation of the stepping motor module (LM1), a new set (S1, S2, S3) of ramp data is transferred by a control (GS) to the logic assembly (LB) via the bus system (10).

10. Device for controlling a plurality of stepping motor modules (SM1, SM2, SM3), particularly in a printer or copier,
with a plurality of power units (LE), each of which supplies at least one stepping motor (M) with current impulses, the stepping motors (M) being advanced one step by each current impulse,
wherein each of the power units (LE) receives pulses from a respective logic assembly (LB), each edge of which pulses generates a current impulse in the power unit (LE), and each interval of which pulses relative to the previous pulse is calculated from a set (S1, S2, S3) of ramp data, the logic assembly (LB), in order to fix the interval of the respective pulse, reading out ramp data which follow one another at predetermined time intervals,
several sets (S1, S2, S3) of ramp data are made available in a memory (16, 18a, 18b, 18c) of the logic assembly (LB),
with a bus system (10) by which the sets (S1, S2, S3) of ramp data which are calculated by a computer (PC) can be transmitted to the logic assembly (LB),
during the operation of the stepping motor module (LM1) the current set (S1, S2 or S3) of ramp data is communicated by a control (GS) via the bus system (10),
the conversion of the set (S1, S2, S3) of ramp data which has been selected in the logic assembly (LB) into pulses with a variable interval is started by a start signal,
**characterized in that** a separate line (14) which is separate from the bus system (10) is provided, which transfers the start signal.

11. Device according to claim 10, wherein each logic assembly (LB) comprises a non-volatile memory (16) and a volatile main memory (18a, 18b, 18c) for the ramp data sets.

12. Device according to claim 11, with a control (GS, 21, 27) which allocates ramp data sets to the stepping motor modules (SM1, SM2, SM3) dependent on operating conditions of a device and which effects the loading of the ramp data sets that have been allocated to the stepping motor modules (SM1, SM2, SM3) by same into their respective main memories (18a, 18b, 18c).

13. Device according to one of the claims 10 to 12, **characterized in that** the power unit (LE) generates a current impulse from the rising edge of the pulse.

14. Device according to one of the claims 10 to 13, **characterized in that**, for a printer or copier, it is provided with a plurality of stepping motor modules (SM1, SM2, SM3) for the transport of carrier material.

15. Device according to claim 14, **characterized in that** in operation a device control (GS) of the printer or copier selects the current set (S1, S2, S3) of ramp data for each stepping motor module (SM1, SM2, SM3), and that the conversion of the selected set (S1, S2, S3) of ramp data into pulses with a variable interval is started by a common start signal for a plurality of the stepping motor modules.

## Revendications

1. Procédé pour commander plusieurs modules de moteur pas-à-pas (SM1, SM2, SM3), en particulier dans un appareil d'impression ou un copieur, dans lequel :
une unité de puissance (LE) de chaque module de moteur pas-à-pas (SM1, SM2, SM3) alimente au moins un moteur pas-à-pas (M) en impulsions de courant, ledit moteur pas-à-pas (M) étant mis en mouvement d'un pas à chaque impulsion de courant,
l'unité de puissance (LE) reçoit des impulsions d'un module logique (LB) du module de moteur pas-à-pas correspondant (SM1, SM2, SM3), qui sont espacées les unes des autres dans le temps, dont le flanc d'impulsion correspondant génère dans l'unité de puissance (LE) une impulsion de courant, et dont l'intervalle d'impulsions correspondant est défini à partir d'un ensemble de données de rampe (S1, S2, S3), le module logique (LB) lisant des données de rampe successives pour déterminer l'intervalle d'impulsions de l'impulsion correspondante à des intervalles de temps prédéterminés,
plusieurs ensembles de données de rampe (S1, S2, S3) sont disponibles dans chaque module logique (LB),
pendant une phase de charge, les ensembles de données de rampe (S1, S2, S3) sont calculés de façon centralisée par un ordinateur (PC) et sont transmis par un système de bus (10) au module logique (LB),
pendant le fonctionnement du module de moteur pas-à-pas (SM1), l'ensemble de données de rampe (S1, S2 ou S3) en cours est communiqué par une commande (GS, 27) au module logique (LB) via le système de bus (10),
la conversion de l'ensemble de données de rampe (S1, S2, S3), choisi dans le module logique (LB), en impulsions d'intervalle variable est démarrée par un signal de départ, et
dans lequel le signal de départ est transmis au module logique (LB) par une ligne (14) distincte du système de bus (10).

2. Procédé selon la revendication 1, dans quel les ensembles de données de rampe (S1, S2, S3) sont transmis, dans une phase d'initialisation, d'une mémoire non volatile (16) dans une mémoire volatile (18) du module logique (LB) en vue de démarrer le mode d'impression.

3. Procédé selon l'une des revendications 1 ou 2, dans lequel l'unité de puissance (LE) génère une impulsion de courant à partir du flanc montant de l'impulsion.

4. Procédé selon l'une des revendications précédentes, dans lequel un ordinateur personnel (PC) utilisé par un opérateur sert d'ordinateur central.

5. Procédé selon l'une des revendications précédentes, dans lequel les modules de moteur pas-à-pas (SM1, SM2, SM3) sont utilisés pour le transport d'une matière de support.

6. Procédé selon la revendication 5, dans lequel la commande d'appareil (GS) de l'appareil d'impression choisit, en mode d'impression, pour chaque module de moteur pas-à-pas (SM1, SM2, SM3), l'ensemble de données de rampe (S1, S2, S3), en cours, et en ce que la conversion de l'ensemble choisi de données de rampe (S1, S2, S3) en impulsions d'intervalle variable est démarrée par un signal de départ commun à plusieurs modules de moteur pas-à-pas.

7. Procédé selon l'une des revendications précédentes, dans lequel chaque ensemble de données de rampe (S1,S2,S3) contient un nombre de données qui indique successivement l'intervalle d'impulsions qui se suivent à une rampe de nombre de tours croissant, ou à une rampe de nombre de tours décroissant du moteur pas-à-pas.

8. Procédé selon l'une des revendications précédentes, dans lequel le module logique correspondant (LB) maintient l'intervalle d'impulsions de la donnée obtenue en dernier d'un ensemble de données de rampe, jusqu'à ce qu'un nouvel ensemble de données de rampe (S1, S2, S3) soit choisi et que la conversion des données de rampe en intervalles d'impulsions pour les impulsions soit démarrée.

9. Procédé selon l'une des revendications précédentes, dans lequel un nouvel ensemble de données de rampe (S1, S2, S3) est transmis par une commande (GS) au module logique (LB) via le système de bus (10) pendant le fonctionnement du module de moteur pas-à-pas (SM1).

10. Dispositif pour commander plusieurs modules de moteur pas-à-pas (SM1, SM2, SM3), en particulier dans un appareil d'impression ou un copieur, dans lequel :
plusieurs une unité de puissance (LE) alimentent au moins un moteur pas-à-pas (M) en impulsions de courant, les moteurs pas-à-pas (M) étant mis en mouvement d'un pas à chaque impulsion de courant,
chacune des unités de puissance (LE) reçoit de chaque module logique (LB) des impulsions dont le flanc d'impulsion correspondant génère dans l'unité de puissance (LE) une impulsion de courant, et dont l'intervalle d'impulsions correspondant par rapport à l'impulsion précédente est défini à partir d'un ensemble (S1, S2, S3), le module logique (LB) lisant des données de rampe successives pour déterminer l'intervalle d'impulsions de l'impulsion correspondante à des intervalles de temps prédéterminés,
plusieurs ensembles de données de rampe (S1, S2, S3) sont disponibles dans une mémoire (16, 18a, 18b, 18c) du module logique (LB),
un système de bus (10) permet de transmettre des ensembles de données de rampe (S1, S2, S3), calculés par un ordinateur (PC), au module logique (LB),
pendant le fonctionnement du module de moteur pas-à-pas (SM1), l'ensemble de données de rampe (S1, S2 ou S3) en cours est communiqué par une commande (GS) via le système de bus (10),
la conversion de l'ensemble de données de rampe (S1, S2, S3), choisi dans le module logique (LB), en impulsions d'intervalle variable est démarrée par un signal de départ,
**caractérisé en ce qu'**il est prévu une ligne (14) distincte du système de bus (10) qui transmet le signal de départ.

11. Dispositif selon la revendication 10, dans lequel chaque module logique (LB) comporte une mémoire non volatile (16) et une mémoire de travail volatile (18a, 18b, 18c) pour les ensembles de données de rampe.

12. Dispositif selon la revendication 11, comportant une commande (GS, 21, 27), qui affecte des ensembles de données de rampe aux modules de moteur pas-à-pas (SM1, SM2, SM3) en fonction des états de fonctionnement d'un appareil, et qui commande le chargement par les modules de moteur pas-à-pas (SM1, SM2, SM3) des ensembles de données qui leur sont affectés dans leur mémoire de travail correspondante (18a, 18b, 18c).

13. Dispositif selon l'une des revendications 10 à 12, **caractérisé en ce que** l'unité de puissance (LE) génère une impulsion de courant à partir du flanc montant de l'impulsion.

14. Dispositif selon l'une des revendications 10 à 13, **caractérisé en ce qu'**il est destiné à un appareil d'impression ou un copieur comportant un grand nombre de modules de moteur pas-à-pas (SM1, SM2, SM3) pour le transport d'une matière de support.

15. Dispositif selon la revendication 14, **caractérisé en ce qu'**une commande d'appareil (GS) de l'appareil d'impression ou du copieur choisit, en fonctionnement, pour chaque module de moteur pas-à-pas (SM1, SM2, SM3), l'ensemble de données de rampe (S1, S2, S3) en cours, et **en ce que** la conversion de l'ensemble choisi de données de rampe (S1, S2, S3) en impulsions d'intervalle variable est démarrée par un signal de départ commun à plusieurs modules de moteur pas-à-pas.
